# EUROPEAN PATENT APPLICATION

(11) **EP 2 693 797 A2**
(43) Date of publication of application: **05.02.2014**
(21) Application number: 13178473.8
(22) Date of filing: 30.07.2013
(51) Int. Cl.: H04W 24/08

(54) **Method for Delivering Information to a Radio Access Network**

(30) Priority: 30.07.2012 ES 201231230
(71) Applicant: Vodafone IP Licensing Limited, The Connection Newbury Berkshire RG14 2FN (GB); Vodafone España, S.A.U., 28108 Alcobendas (ES)
(72) Inventor: De Pasquale, Andrea, 28108 Alcobendas (ES); Dominguez Romero, Francisco Javier, 28150 Madrid (ES); Serrano Solsona, Clara, 28108 Alcobendas (ES)
(74) Representative: Ferrara, Simone

(57) **Abstract**

The invention refers to a method for delivering information (120) to a Radio Access Network of a telecommunications network, the method comprising:
- executing an application for collecting information (120) in a user equipment (10);
- encapsulating (s101) the information (120) collected by the application in a packet (100);
- sending (s102) the packet from the user equipment (10) to a network entity (20, 30) of the Radio Access Network;
- detecting (s103) the packet by the network entity (20, 30) of the Radio Access Network;
- retrieving (s104) the collected information (120) encapsulated in the packet by the network entity (20, 30) of the Radio Access Network; and,
- configuring (s105) a set of Radio Access Network parameters by the network entity (20, 30) of the Radio Access Network based on the collected information (120).

The invention also refers to a network entity (20, 30) of a Radio Access Network and to a user equipment (10) for delivering information to a Radio Access Network.

## Description

### FIELD OF THE INVENTION

The present invention has its application within the field of telecommunications.

### BACKGROUND OF THE INVENTION

The introduction of smartphones has strongly increased the level of variety of services and type of user experience within the mobile world; as an example, the type and version of the operating system, the phone model, the characteristics of the installed applications in the smartphone and the type of web pages navigated by the end user all contribute to provide a different set of requirements towards the Network in terms of single connection optimization as well as overload management.

A central point of network optimization is the UTRAN. According to the 3GPP standard TS 25.301 only access-layer information is well known by BSC/RNCs and LTE eNodeBs, whilst, instead, a big amount of useful information for optimization is contained in the so called Application Layer or Non-Access Stratum layer.

Access Network optimization therefore becomes an increasingly complex task since access is blind on a huge amount of information available at the end user terminal.

### SUMMARY OF THE INVENTION

The invention refers to a method for delivering information to a Radio Access Network, to a network entity of the Radio Access Network and to a user equipment for delivering information to a Radio Access Network according to claims 1, 14 and 17, respectively. Preferred embodiments of the method and the network entity are defined in the dependent claims.

The present invention serves to solve the aforesaid problem by providing a network entity of the Radio Access Network with specific user equipment (UE) information in order to optimise the use of radio resources.

A first aspect of the invention relates to a method for delivering information to a Radio Access Network, RAN, of a telecommunications network, comprising the following steps:
- executing an application for collecting information in a user equipment;
- encapsulating the information collected by the application in a packet;
- sending the packet from the user equipment to a network entity of the RAN;
- detecting the packet by the network entity of the RAN;
- retrieving the collected information encapsulated in the packet by the network entity of the RAN; and,
- based on the collected information, configuring a set of RAN parameters by the network entity of the RAN.

Said application for collecting information is preferably a software application such as a widget.

The information collected and delivered to the Radio Access Network is preferably application layer data or non-access stratum layer data.

The application is preferably preloaded in the user equipment. Alternatively, the method further comprises a previous step of downloading the application, or the application can be executed in real-time.

The step of encapsulating the information collected by the application in a packet preferably comprises adding a header of a transport protocol, preferably selected from TCP or UDP. Preferably a specific IP address defined by a network operator and a given port number are also included in the packet.

The step of detecting the packet by the network entity of the Radio Access Network preferably comprises shallow packet inspection. This step preferably comprises comparing the IP address and the port number in the packet with the ones defined by a network operator.

The current method provides the means for transferring information to the Radio Access Network, which information can be used in order to fine tune several network parameters like: channel type change, mobility thresholds, or even application information customisation, etc.

According to preferred embodiments, the step of configuring a set of Radio Access Network parameters by the network entity of the Radio Access Network may comprise one or more of the following:
- Modifying a timer to go from a dedicated channel to a non-dedicated channel.
- Allocating different priorities to different types of terminals.
- Modifying overload control policies.
- Modifying a Radio Access Bearer configuration.
- Modifying a content optimization function.

A second aspect of the invention refers to a network entity of a Radio Access Network of a telecommunications network, comprising:
- means for detecting a packet sent by a user equipment of the telecommunications network;
- means for retrieving information encapsulated in the packet; and,
- means for configuring a set of Radio Access Network parameters based on the information.

Detecting the packet preferably comprises shallow packet inspection.

The step of detecting the packet preferably comprises comparing an IP address and a port number included in the packet with an IP address and port number defined by a network operator.

The information retrieved the Radio Access Network entity preferably is either application layer information or non-access stratum layer information.

A third aspect of the invention relates to a user equipment for delivering information to a Radio Access Network of a telecommunications network, the user equipment comprising:
- means for executing an application for collecting information;
- means for encapsulating the information collected by the application in a packet;
- means for sending the packet to a network entity of the Radio Access Network.

The user equipment may include storing means for storing the application for collecting information, which application is previously downloaded in the user equipment. Alternatively, the application can be executed in real-time.

In the present invention, the Radio Access Network can be 3G or LTE.

These and other aspects of the invention will be apparent from and elucidated with reference to the embodiment described hereinafter.

### BRIEF DESCRIPTION OF THE DRAWINGS

To complete the description and in order to provide for a better understanding of the invention, a drawing is provided. The drawing forms an integral part of the description and illustrate the preferred embodiments of the invention, which should not be interpreted as restricting the scope of the invention, but just as an example of how the invention can be embodied.

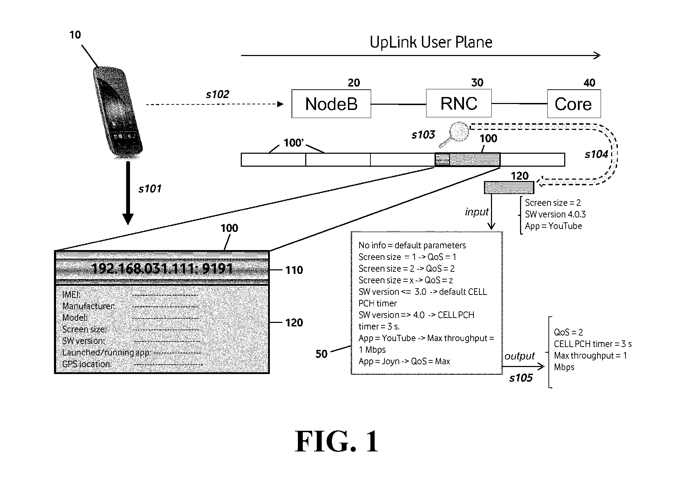

The drawing comprises Figure 1, which schematically shows how user equipment information is delivered to a BSC/RNC for Radio Access Network optimization.

### DETAILED DESCRIPTION OF THE PREFERRED EMBODIMENTS

According to a preferred embodiment of the present invention as shown in Figure 1, a widget is loaded or pre-loaded into a smartphone 10. When the widget is run on the smartphone 10, a certain amount of information is retrieved from the smartphone and encapsulated in a specific packet 100 (step s101).

The packet 100 contains a header 110 of a predefined transport protocol (TCP or UDP), specifying a predefined IP target address and a predefined port number to mark the packet as generated by the widget, so as to distinguish it from standard user plane packets 100'. In the example shown in Figure 1, such IP address is '192.168.031.111' and the port number is '9191'.

The packet 100 also contains the following relevant information 120 of the smartphone: IMEI, manufacturer, model, screen size, SW version, launched or running applications, GPS location.

The packet 100 is then sent (step s102), together with the rest of standard packets 100' to a core network 40 via the corresponding Radio Access Network, RAN.

The Node B 20/ Radio Network Controller, RNC 30 (or an eNodeB in LTE) uses shallow packet inspection (step s103) to analyze the user plane Uplink traffic sent through a specific Radio Access Bearer.

When the target IP address and port number in the header 110 of the widget are identified as the target combination of IP address and port as defined by the network operator, the information 120 within the packet 100 is read (s104).

The RNC 30 then compares the values of the information received with a set of RAN parameters contained in a parameter database 50, and selects (s105) appropriate values to be applied for managing the ongoing packet connection.

As shown in Figure 1, when the RNC detects a packet 100 having a header 110 with the combination IP address/port number being '192.168.031.111:9191', it retrieves the information 120 contained in such packet 100. The information in this case is as follows:
Screen size = 2
SW version = 4.0.3
App = YouTube

The RNC then consults the parameter database 50, which in the present case has the following parameters:
No info = default parameters
Screen size = 1 -> QoS = 1
Screen size = 2 -> QoS = 2
Screen size = x -> QoS = z
SW version <= 3.0 -> default CELL PCH timer
SW version => 4.0 -> CELL PCH timer = 3 s.
App = YouTube -> Max throughput = 1 Mbps
App = Joyn -> QoS = Max

As a result, the RNC establishes the following values for the ongoing connection:
QoS = 2
CELL PCH timer = 3 s
Max throughput = 1 Mbps,
thereby improving the experience of the user who has ran the widget on his/her smartphone.

The pieces of information communicated to the BSC/RNC or eNodeB can be one or more of the following:
- Terminal's IMEI.
- Terminal's type (Tablet, Smartphone, etc.).
- Screen size, pixels.
- OS type and version number.
- Chipset vendor and Firmware version.
- Location based information based on GPS.
- If it has not been filtered, visited URL during an http session (useful for potentially easier survey to optimize future caching).

This includes information about the user equipment, particularly regarding the one or more of the hardware, operating system, firmware, software and location of the user equipment. This information is collected using an application (such as a widget) operative on the user equipment.

Based on the received information the RNC or eNodeB is able to modify one or more of the following:
- Timers to go from DCH to FACH and/or from FACH to PCH states.
- QoS policies priorities influencing the scheduler.
- Overload control policies.
- RAB (Radio Access Bearer) configurations.
- Information transcoding to adapt to the terminal capabilities (like the screen size).
- Video transcoding to optimize the video size to the terminal.
- Statistics.
- Etc.

As indicated above, with the information received from the terminal (or user equipment), the network entity is able to modify parameters of the Radio Access Network, which may comprise one or more of physical layer parameters, data link layer parameters, network layer parameters and transport layer parameters. These may include parameters of the radio access network interface and Internet Protocol (IP) parameters. In particular, the network entity is able to modify the timers for switching channels to go from dedicated state DCH, in which a channel is allocated to the user, to a non-dedicated state.

For example, if the terminal is a smartphone, it is well known that smartphones are usually more limited by the battery consumption; therefore, the timers from dedicated to non-dedicated can be made shorter for this kind of devices. Tablets are not so battery-critical, so timers can be longer. And USB dongles connected to a PC do not have any battery limitation, so timers can be even longer.

In 3G the use of the Fast Dormancy feature by smartphones is quite well known. Every terminal manufacturer implements this FD feature with different timers. This FD basically consists in the disconnection from the network when the terminal does not have any more data to transmit. Then, having the information of the IMEI and the OS software version, it is possible to know the value of the timers for Fast Dormancy, and then the network is able to go to a more efficient channel state (like URA_PCH or Cell_PCH) before the terminal requests the disconnection due to the FD feature.

In 3G there are four different channel states:
- Cell_DCH state: this state is characterised by a dedicated physical channel allocated to the UE (user equipment) in uplink and downlink.
- Cell_FACH state: this state is characterised by the fact that no dedicated physical channel is allocated to the UE and common channels are used to transmit data.
- Cell_PCH state: this state is also characterised by no channel allocation, but with information of the UE at the RNC, knowing the position of the UE at cell level.
- URA_PCH state: this state is also characterised by no channel allocation, but with information of the UE at the RNC, knowing the position of the UE at URA level.

By means of the information provided by the widget, the BSC/RNC can configure the timers to go from one of the previous states to the other.

In LTE there are just two states: connected and idle mode. Thus, with the terminal information that has been received, the eNodeB can modify the timer to switch between connected and idle mode.

Also, the QoS (Quality of Service) differentiation, i.e. the distribution of RAN resources based on user priority, can be differently set depending on the terminal information. For example:
- Different priorities can be allocated to different types of terminals: Smartphones, PC connectivity devices, tablets, normal phones.
- Specific models can be prioritized or de-prioritised, for example, giving a higher priority to iPhones.

Overload control policies are in charge of discarding connections and/or traffic in case any part of the RAN network is congested. In the present case these policies can be modified to start the discarding of connections by the most active phones.

For example, if the signalling processing boards are congested, then it is necessary to control the terminal which is producing more signalling. There are statistics per terminal in the network, so that it is possible to configure the RNC to start rejecting calls from some specific models.

It is known that the parameters of a RAB, namely the maximum bandwidth and the allowed frame sizes, can be configured according to the requirements of the application using it. Thus, with the information received it is possible to avoid assigning specific RAB combinations which are known to create issues with specific terminal types.

Also, traditional transcoding (or adaptation) on multimedia has been performed from the perspective of user terminal capabilities such as display sizes and decoding processing power. Then, the functions of the content optimization in the RAN control the downloaded content (as for example, web pages) depending on the radio conditions and load. This functionality can have a content adaptation to the screen size which depends on the screen & display size information obtained from the terminal.

Depending on the screen size (pixels) of the terminal, the quality of a video perceived by the customer is different. The functions of video optimization in the RAN control the video coding depending on the radio conditions and load. This functionality can have a minimum and maximum quality ranges which depend on the size information obtained from the terminal.

Another example is to use the OS model to change this video optimization function. The quality requested for the YouTube application running on an iPhone or an iPad is low in 2G/3G networks, and high in WiFi networks. In case the network is able to support the high bit rate, the RAN can modify the quality requested by the UE to the video server knowing that it is an iPhone/iPad requesting high quality.

Additionally, all the information sent by the terminal can be statistically analysed in order to optimize the network in the future. For example:
- It is possible to know the signalling produced by each terminal model, so that further optimizations like the overload control can be applied to the models producing more signalling.
- It is also possible to know typical URLs accessed in the Internet, so that they can be used in a network caching function.
- It is possible to know the exact location of traffic (GPS), thereby optimising the network tilts or adding sites/microcells to serve traffic more efficiently.

Therefore, by means of the present invention the Radio Access Network can become much smarter in managing user experience and overload.

The application may be installed on the terminal and configured to run on the terminal for collecting information as described above. The information may include, for example, the IMEI of the terminal and other type of useful terminal information as described above. This information may be encapsulated as described above (directly or indirectly by the application) and transmitted to the BSC/RNC or eNodeB as discussed above. In this way, the Radio Access Network (RAN) relies on the application at the terminal for obtaining information which is then used for optimization, rather than on standard mechanisms in order to retrieve information about the terminal. One advantage of this invention is that the RAN is capable of retrieving much more information from the terminal(s) than it would if it was to rely on standard mechanisms in order to retrieve information about the terminal(s). This, in return, enables the RAN to optimize the network more efficiently and effectively. For example, the RAN can apply different parameters for the radio algorithms as a function of the type of information received from the terminal (for example, the IMEI). As a variant, the RAN may also retrieve information about the terminal independently from the application (e.g., by using the standard mechanisms described above) and use this, for example, to confirm or supplement the info received from the application. Nevertheless, the RAN will still rely on the application to retrieve information from the terminal.

The invention is obviously not limited to the specific embodiments described herein, but also encompasses any variations that may be considered by any person skilled in the art (for example, as regards the choice of components, configuration, etc.), within the general scope of the invention as defined in the appended claims.

## Claims

1. A method for delivering information (120) to a Radio Access Network of a telecommunications network, the method comprising:
- executing an application for collecting information (120) in a user equipment (10);
- encapsulating (s101) the information (120) collected by the application in a packet (100);
- sending (s102) the packet from the user equipment (10) to a network entity (20, 30) of the Radio Access Network;
- detecting (s103) the packet by the network entity (20, 30) of the Radio Access Network;
- retrieving (s104) the collected information (120) encapsulated in the packet by the network entity (20, 30) of the Radio Access Network; and,
- configuring (s105) a set of Radio Access Network parameters by the network entity (20, 30) of the Radio Access Network based on the collected information (120).

2. The method according to claim 1, wherein the step of encapsulating the information collected by the application in a packet comprises adding a header (110) of a transport protocol.

3. The method according to claim 2, wherein the step of encapsulating the information collected by the application in a packet comprises adding a specific IP address defined by a network operator and a given port number.

4. The method according to claim 3, wherein the step of detecting the packet by the network entity of the Radio Access Network comprises comparison of the IP address and the port number with an IP address and port number defined by a network operator.

5. The method according to any of claims 2-4, wherein said transport protocol is selected from TCP or UDP.

6. The method according to any of claims 1-5, wherein the step of detecting the packet by the network entity (20, 30) of the Radio Access Network comprises shallow packet inspection.

7. The method according to any of claims 1-6, wherein said information is contained in an application layer or in a non-access stratum layer.

8. The method according to any of claims 1-7, wherein said information comprises one or more of: the user equipment IMEI; a type of the user equipment; a screen size of the user equipment; an operating system type of the user equipment; an operating system version number of the user equipment; a chipset vendor for the user equipment; a chipset firmware version number of the user equipment; location-based information for the user equipment; a visited URL during an HTTP session for the user equipment.

9. The method according to any of claims 1-8, wherein the step of configuring the set of Radio Access Network parameters is based on statistics derived from the collected information from the user equipment and collected information from other user equipment.

10. The method according to any of claims 1-9, wherein configuring a set of Radio Access Network parameters comprises one or more of: modifying a timer to go from a dedicated channel to a non-dedicated channel; setting mobility thresholds; allocating different priorities to different types of terminals; modifying overload control policies; modifying a Radio Access Bearer configuration; adjusting network tilts; setting a network caching function; modifying a content optimization function; and configuring information transcoding settings.

11. Method according to any of claims 1-10, wherein the Radio Access Network is 3G or LTE.

12. A network entity (20, 30) of a Radio Access Network of a telecommunications network, comprising:
- means for detecting a packet (100) sent by a user equipment (10) of the telecommunications network;
- means for retrieving information (120) encapsulated in the packet (100); and,
- means for configuring a set of Radio Access Network parameters based on the information (120).

13. The network entity according to claim 12, wherein detecting the packet comprises shallow packet inspection.

14. The network entity according to any of claims 12-13, wherein detecting the packet comprises comparing an IP address and a port number included the packet with an IP address and port number defined by a network operator.

15. A User equipment (10) for delivering information to a Radio Access Network of a telecommunications network, comprising:
- means for executing an application for collecting information (120);
- means for encapsulating the information (120) collected by the application in a packet (100);
- means for sending the packet (100) to a network entity (20, 30) of the Radio Access Network.
